# EUROPEAN PATENT APPLICATION

(11) **EP 4 269 828 A1**
(43) Date of publication of application: **01.11.2023**
(21) Application number: 21910609.3
(22) Date of filing: 16.12.2021
(51) Int. Cl.: F16D 7/02, F16D 43/21

(54) **TORQUE LIMITER**

(30) Priority: 24.12.2020 JP 2020214433
(71) Applicant: Aisin Fukui Corporation, Echizen-shi Fukui 915-8520 (JP)
(72) Inventor: TANIGUCHI Tetsuro, Echizen-shi, Fukui 915-8520 (JP); YOSHIDA Yoshihiro, Echizen-shi, Fukui 915-8520 (JP); TAKESHITA Yoshihito, Echizen-shi, Fukui 915-8520 (JP)
(74) Representative: Kramer Barske Schmidtchen Patentanwälte PartG mbB
(86) International application number: PCT/JP2021/046599
(87) International publication number: WO 2022/138461

(57) **Abstract**

A torque limiter disposed between first and second rotating members includes a first transmitting member that rotates integrally with one of the first and second rotating members and includes a pair of first annular tapered surfaces inclined in opposite directions to each other in an extending direction of a rotational axis, a second transmitting member that rotates integrally with the other of the first and second rotating members and includes a second annular tapered surface capable of contacting one of the first annular tapered surfaces, a third transmitting member that includes a third annular tapered surface capable of contacting the other of the first annular tapered surfaces, and a tightening mechanism that tightens the second and third transmitting members such that the second annular tapered surface contacts one of the first annular tapered surfaces and the third annular tapered surface contacts the other of the first annular tapered surfaces.

## Description

### Technical Field

The present disclosure relates to a torque limiter disposed between a first rotating member to which power is transmitted from a drive source and a second rotating member to which power is transmitted from the first rotating member.

### Background

A conventionally known driving device includes an input shaft connected to an engine, an electric motor shaft which is an output shaft of a first electric motor (generator), a counter output shaft integrated with a counter drive gear, a planetary gear set that mutually connects the input shaft, the electric motor shaft, and the counter output shaft for power transmission, a counter shaft including a counter driven gear that meshes with the counter drive gear and a differential drive pinion gear, a differential device that includes a differential ring gear that meshes with the differential drive pinion gear, and a second electric motor that is connected to the counter driven gear via a drive gear (see, for example, Patent Literature 1). In the driving device, a tip of the input shaft is connected to a crankshaft of the engine via a damper device including a torque limiter that permits transmission of torque within a predetermined range. The torque limiter includes a dry friction material. The damper device (torque limiter) is disposed outside a front cover to prevent wear debris generated by wear of the friction material from scattering onto the first and second electric motors, planetary gear, and the like.

Another conventionally known driving device includes an input shaft connected to an engine, first and second electric motors, a planetary gear, and a torque limiter disposed between a rotor shaft of the first electric motor and a sun gear of the planetary gear (see, for example, Patent Literature 2). The torque limiter of the driving device is a wet type frictional engagement device with a plurality of disk plates. The torque limiter is disposed inside the case together with the first and second electric motors and the planetary gear.

### Citation List

### Patent Literature

PTL1: Japanese Patent Application Laid-Open No. 2003-191760
PTL2: Japanese Patent No. 5252122

### Summary

In the driving device including the dry-type torque limiter as described in the Patent Literature 1, a partition member (front cover) is required between the torque limiter and a driving mechanism to deal with the generation of wear debris, thereby making it difficult to suppress size enlargement of the driving device. On the other hand, when the wet-type torque limiter as described in the Patent Literature 2 is disposed in a case together with the electric motor and gears that are lubricated and cooled by oil, the partition member such as the front cover is not necessary. However, in order to sufficiently increase a limit torque of the wet type torque limiter, it is necessary to increase diameters and the number of the disc plates, thereby making it difficult to suppress the enlargement of the torque limiter and the entire driving device that includes the torque limiter.

A main object of this disclosure is to ensure a sufficient limit torque of the torque limiter while reducing a size of the torque limiter and, thus, a device including the torque limiter.

A torque limiter of the present disclosure is disposed between a first rotating member to which power is transmitted from a drive source and a second rotating member to which power is transmitted from the first rotating member. The torque limiter includes: a first transmitting member configured to rotate integrally with one of the first and second rotating members and to include a pair of first annular tapered surfaces inclined in opposite directions to each other in an extending direction of a rotational axis; a second transmitting member configured to rotate integrally with the other of the first and second rotating members and to include a second annular tapered surface capable of contacting with one of the pair of first annular tapered surfaces of the first transmitting member; a third transmitting member configured to rotate integrally with the other of the first and second rotating members and to include a third annular tapered surface capable of contacting with the other of the pair of first annular tapered surfaces of the first transmitting member; and a tightening mechanism configured to tighten the second and third transmitting members such that the second annular tapered surface contacts with one of the pair of first annular tapered surfaces and the third annular tapered surface contacts with the other of the pair of first annular tapered surfaces.

The torque limiter of the present disclosure is disposed between the first rotating member to which power is transmitted from the drive source and the second rotating member to which power is transmitted from the first rotating member. The torque limiter includes the first transmitting member, the second transmitting member, the third transmitting member, and the tightening mechanism. The first transmitting member is configured to rotate integrally with one of the first and second rotating members and to include the pair of first annular tapered surfaces inclined in opposite directions to each other in then extending direction of the rotational axis. The second transmitting member is configured to rotate integrally with the other of the first and second rotating members and to include the second annular tapered surface capable of contacting with one of the pair of first annular tapered surfaces of the first transmitting member. The third transmitting member is configured to rotate integrally with the other of the first and second rotating members and to include the third annular tapered surface capable of contacting with the other of the pair of first annular tapered surfaces of the first transmitting member. The tightening mechanism is configured to tighten the second and third transmitting members such that the second annular tapered surface contacts with one of the pair of first annular tapered surfaces and the third annular tapered surface contacts with the other of the pair of first annular tapered surfaces. The torque limiter of the present disclosure allows a sufficient contact area between the pair of first annular tapered surfaces and the second and third annular tapered surfaces while suppressing an increase in outer diameters of the first, second, and third transmitting members. Thus, by applying sufficient tightening force to the second and third transmitting members, a limit torque, which is an upper limit value of torque that does not cause a slip between the pair of first annular tapered surfaces and the second and third annular tapered surfaces, is sufficiently secured. As a result, the torque limiter of the present disclosure enables the limit torque to be sufficiently secured while reducing the size of the torque limiter and thus the device including the torque limiter. The torque limiter of the present disclosure may be disposed within a space in which oil is supplied, or outside of a space in which oil is supplied.

### Brief Description of Drawings

Fig. 1 is a schematic configuration diagram illustrating a vehicle with a driving device including the torque limiter of the present disclosure;
Fig. 2 is a cross-sectional view illustrating the torque limiter of the present disclosure;
Fig. 3 is a cross-sectional view illustrating another torque limiter of the present disclosure;
Fig. 4 is a cross-sectional view illustrating yet another torque limiter of the present disclosure;
Fig. 5 is a cross-sectional view illustrating another torque limiter of the present disclosure; and
Fig. 6 is a cross-sectional view illustrating yet another torque limiter of the present disclosure.

### Description of Embodiments

The following describes some aspects of the present disclosure with reference to drawings.

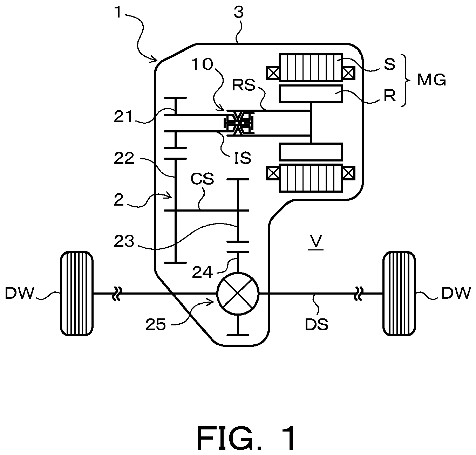

Fig. 1 is a schematic configuration diagram of a vehicle V with a driving device 1 including a torque limiter 10 of the present disclosure. The vehicle V is an electric vehicle including a motor generator (rotating electric machine) MG as a drive source. The driving device 1 outputs power from the motor generator MG to a pair of drive shafts (output shafts) DS, which are connected to a pair of drive wheels DW of the vehicle V. As shown in Fig. 1, the driving device 1 includes, in addition to the motor generator MG, a gear train 2 and a case 3. The gear train 2 transmits power (torque) between the motor generator MG and the pair of drive shafts DS. The case 3 accommodates the motor generator MG and the gear train 2.

The motor generator MG is a synchronous generator motor (three-phase AC motor) including a stator S and a rotor R, and exchanges electric power with a power storage device (battery, not shown) via an inverter not shown. The motor generator MG operates as an electric motor that is driven by the electric power from the power storage device to generate driving torque, and also outputs regenerative braking torque when the vehicle V is braked.

The stator S includes an annular stator core and three (three-phase) stator coils wound around the stator core. The stator S is fastened (fixed) to the case 3 by a plurality of bolts not shown in the figure. The rotor R includes an annular-shaped rotor core, end plates which are arranged on both sides of the rotor core in an axial direction of the rotor core, and the like. The rotor R is fixed to one end of a hollow cylindrical rotor shaft RS. The rotor shaft RS is supported parallel to and rotatable with the pair of drive shafts DS by the case 3 via bearings not shown. The rotor shaft RS is coaxially connected to a hollow cylindrical input shaft IS via the torque limiter 10.

Gear train 2 includes a counter drive gear 21, a counter driven gear 22, a drive pinion gear (final drive gear) 23, and a differential gear 25 with a differential ring gear (final driven gear) 24. The counter drive gear 21 is an external gear that rotates integrally with the input shaft IS described above. The counter drive gear 21 may be integrally molded with the input shaft IS. The counter drive gear 21, which is separate from the input shaft IS, may be fixed to the input shaft IS.

The counter driven gear 22 is an external gear with a larger diameter than the counter drive gear 21 that is meshed with the counter drive gear 21. The counter driven gear 22 rotates integrally with a counter shaft CS, which is rotatably supported by the case 3 parallel with the rotor shaft RS, the input shaft IS and the pair of drive shafts DS. The drive pinion gear 23 is an external gear with a smaller diameter than the counter driven gear 22, which is molded integrally with the counter shaft CS, for example, to be located on the opposite side of the counter driven gear 22. As a result, the drive pinion gear 23 rotates coaxially and integrally with the counter driven gear 22 and the counter shaft CS. The drive pinion gear 23, which is separate from the counter shaft CS, may be fixed to the counter shaft CS.

The differential ring gear 24 is an external gear that meshes with the drive pinion gear 23. The differential gear 25 includes a pair (two) of pinion gears, a pair (two) of side gears respectively fixed to the drive shaft DS and meshing with the pair of pinion gears respectively, a pinion shaft that supports the pair of pinion gears, a differential case to which the above differential ring gear 24 is connected (fixed) (all of which are omitted from the figure) . The differential case accommodates the pair of pinion gears and the pair of side gears.

The case 3 is configured, for example, by fastening a housing, a case body, and a cover. In this embodiment, the housing, the case body and the cover are all aluminum alloy castings. Oil for lubrication and cooling is supplied to the motor generator MG, the gear train 2, bearings (not shown), and the like, which are accommodated in the case 3. That is, an interior of case 3 is the space where the oil is supplied.

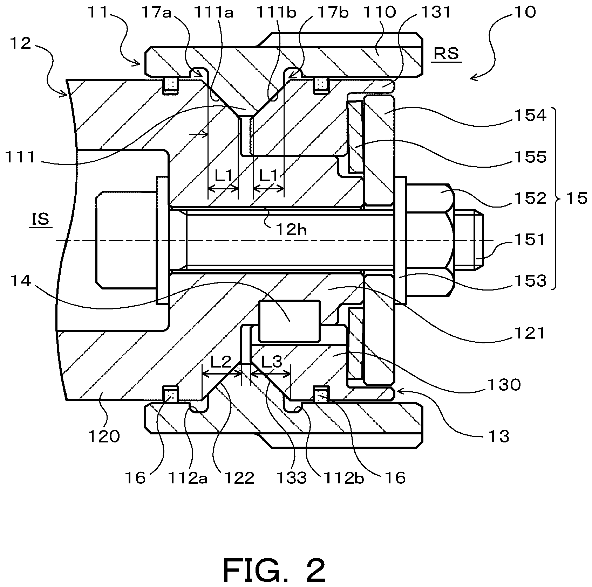

Fig. 2 is a cross sectional view of the torque limiter 10 included in the driving device 1. In this embodiment, the torque limiter 10 is disposed between the rotor shaft RS as a first rotating member to which power is transmitted from the motor generator MG as the drive source and the input shaft IS as a second rotating member to which power is transmitted from the rotor shaft RS. The torque limiter 10 allows transmission of torque equal to or less than a predetermined limit torque Tlim between the rotor shaft RS and the input shaft IS. Further, the torque limiter 10 allows a slip between the rotor shaft RS and the input shaft IS in response to an increase in the torque transmitted to the rotor shaft RS or the input shaft IS.

As shown in Fig. 2, the torque limiter 10 includes a first transmitting member 11, a second transmitting member 12, a third transmitting member 13, and a tightening mechanism 15. The first transmitting member 11 is a tubular body formed of a metal such as steel. As shown in Fig. 2, the first transmitting member 11 includes a substantially cylindrical tubular portion 110 and an annular projection 111 protruding radially inward from an inner circumferential surface of the tubular portion 110. A spline is formed on an outer circumferential surface of the tubular portion 110. The first transmitting member 11 is connected to the rotor shaft RS as the first rotating member via the spline so as to rotate integrally.

A pair of first annular tapered surfaces 111a, 111b are formed on the projection 111 so as to be inclined in opposite directions to each other in an extending direction of a rotational axis (see one dot chain line in Fig. 2) of the first transmitting member 11. The first annular tapered surface 111a is an inverse conical surface (inverse tapered surface) with the above rotational axis as its central axis, whose diameter decreases from an end on the input shaft IS side (left end in Fig. 2) toward an end on the rotor shaft RS side (right end in Fig. 2). The first annular tapered surface 111b is an inverse conical surface (inverse tapered surface) with the above rotational axis as its central axis, whose diameter decreases from an end on the rotor shaft RS side (right end in Fig. 2) toward an end on the input shaft IS side (left end in Fig. 2).

The pair of first annular tapered surfaces 111a, 111b are symmetrical with respect to a plane passing through a center of the projection 111 in the axial direction and orthogonal to the above rotational axis. That is, an apex angle of a cone defining the first annular tapered surface 111a and an apex angle of a cone defining the first annular tapered surface 111b are identical. An axial length of the first annular tapered surface 111a and an axial length of the first annular tapered surface 111b have an identical value of L1. Further, the first transmitting member 11 (tubular portion 110) includes an annular recess 112a that extends along an outer circumferential edge of the first annular tapered surface 111a and an annular recess 112b that extends along an outer circumferential edge of the first annular tapered surface 111b.

The second transmitting member 12 is a tubular body formed of a metal such as steel. As shown in Figure 2, the second transmitting member 12 includes a substantially cylindrical tubular portion 120 and a reduced diameter portion 121 which is smaller in diameter than the tubular portion 120 and formed at an end of the tubular portion 120. A spline (not shown) is formed around an outer circumferential surface of an end of the tubular portion 120 opposite to the reduced diameter portion 121. The second transmitting member 12 is configured (connected or integrally molded) to rotate integrally with the input shaft IS as the second rotating member via the spline. A through hole 12h is formed in the tubular portion 120 and the reduced diameter portion 121. Further, a second annular tapered surface 122 is formed on an outer circumferential surface of an end (right end in Fig. 2) of the tubular portion 120 on the rotor shaft RS side.

The second annular tapered surface 122 is a conical surface with a rotational axis (see one dot chain line in Fig. 2) of the second transmitting member 12 as its central axis, whose diameter decreases from an end on the input shaft IS side (left end in Fig. 2) to an end on the rotor shaft RS side (right end in Fig. 2). An apex angle of a cone defining the second annular tapered surface 122 is the same as the apex angle of the cone defining the first annular tapered surface 111a of the first transmitting member 11. As shown in Fig. 2, an axial length L2 of the second annular tapered surface 122 is longer than the axial length L1 of the first annular tapered surface 111a of the first transmitting member 11. An area of the second annular tapered surface 122 is larger than an area of the first annular tapered surface 111a.

In this embodiment, a hardness of the second annular tapered surface 122 is higher than that of the first annular tapered surface 111a by changing a heat treatment applied to the first annular tapered surface 111a and a heat treatment applied to the second annular tapered surface 122, or by changing the material of the first transmitting member 11 and that of the second transmitting member 12. In addition, a seal groove is formed on an outer circumferential surface of the tubular portion 120 of the second transmitting member 12 so as to be located on the input shaft IS side (left side in Fig. 2) rather than the second annular tapered surface 122. A seal member 16, such as a seal ring or an O-ring, is disposed in the seal groove of the tubular portion 120.

The third transmitting member 13 is a tubular body formed of a metal such as steel. As shown in Fig. 2, the third transmitting member 13 includes a substantially cylindrical tubular portion 130 and an extended tubular portion 131 that extends axially from an outer circumference portion of an end face on the rotor shaft RS side (right end in Fig. 2) of the tubular portion 130. The tubular portion 130 of the third transmitting member 13 has an inner diameter slightly larger than an outer diameter of the reduced diameter portion 121 of the second transmitting member 12. The extended tubular portion 131 has an outer diameter that is the same as an outer diameter of the tubular portion 130 and an inner diameter that is larger than the inner diameter of the tubular portion 130.

A third annular tapered surface 133 is formed on an outer circumferential surface of an end of the tubular portion 130 on the input shaft IS side (left end in Fig. 2). The third annular tapered surface 133 is a conical surface with a rotational axis of the third transmitting member 13 (see one dot chain line in Fig. 2) as its central axis, whose diameter decreases from an end on the rotor shaft RS side (right end in Fig. 2) to an end on the input shaft IS side (left end in Fig. 2). An apex angle of a cone defining the third annular tapered surface 133 is the same as the apex angle of the cone defining the first annular tapered surface 111b of the first transmitting member 11.

As shown in Fig. 2, an axial length L3 of the third annular tapered surface 133 is longer than the axial length L1 of the first annular tapered surface 111b of the first transmitting member 11. An area of the third annular tapered surface 133 is larger than an area of the first annular tapered surface 111b. In this embodiment, a hardness of the third annular tapered surface 133 is higher than that of the first annular tapered surface 111b by changing a heat treatment applied to the first annular tapered surface 111b and a heat treatment applied to the third annular tapered surface 133, or by changing the material of the first transmitting member 11 and that of the third transmitting member 13. In addition, a seal groove is formed on an outer circumferential surface of the tubular portion 130 of the third transmitting member 13 so as to be located on the rotor shaft RS side (right side in Fig. 2) rather than the third annular tapered surface 133. The seal member 16, such as the seal ring or the O-ring, is disposed in the seal groove of the tubular portion 130.

An end portion of the second transmitting member 12 on the reduced diameter portion 121 side is inserted into the first transmitting member 11 such that the second annular tapered surface 122 contacts with the first annular tapered surface 111a of the projection 111 and the reduced diameter portion 121 is located radially inward of the first annular tapered surface 111b of the projection 111. An end portion of the third transmitting member 13 on the third annular tapered surface 133 side is inserted into the first transmitting member 11 such that the third annular tapered surface 133 contacts with the first annular tapered surface 111b of the projection 111. As a result, the first transmitting member 11 encircles a part of the second transmitting member 12 and a part of the third transmitting member 13.

Further, the reduced diameter portion 121 of the second transmitting member 12 is fitted within the tubular portion 130 of the third transmitting member 13. The tubular portion 130 engages with a key 14 as a detent held by the reduced diameter portion 121. As a result, a rotation of the third transmitting member 13 with respect to the second transmitting member 12 is restricted, and the third transmitting member 13 is supported so as to rotate integrally by the second transmitting member 12 and is connected to the input shaft IS so as to rotate integrally. The second transmitting member 12 and the third transmitting member 13 may be connected by a spline so as to rotate integrally. The second and third transmitting members 12, 13 are tightened by the tightening mechanism 15 such that the second annular tapered surface 122 closely contacts with the first annular tapered surface 111a of the first transmitting member 11 and the third annular tapered surface 133 closely contacts with the first annular tapered surface 111b.

As shown in Fig. 2, the tightening mechanism 15 includes a bolt 151, a nut 152, a washer 153, an annular pressing member 154, and an annular disc spring 155 as an elastic member. The bolt 151 is inserted into the through hole 12h through an interior of the tubular portion 120 of the second transmitting member 12. The head of the bolt 151 contacts with an end face of the reduced diameter portion 121 that surrounds the through hole 12h within the tubular portion 120. The disc spring 155 is disposed within the extended tubular portion 131 of the third transmitting member 13 so as to encircle a tip of the reduced diameter portion 121 and contact with an end face of the tubular portion 130. Further, the pressing member 154 is disposed within the extended tubular portion 131 so as to contact with the disc spring 155. The tip of the reduced diameter portion 121 of the second transmitting member 12 is reduced in diameter so as not to interfere with the disc spring 155, and the pressing member 154 contacts with a tip surface of the reduced diameter portion 121. That is, the disc spring 155 is disposed between the third transmitting member 13 and the pressing member 154 so as to be located radially outside of a butt portion between the pressing member 154 and the reduced diameter portion 121 of the second transmitting member 12.

The tip of the bolt 151 protrudes from the reduced diameter portion 121 and the pressing member 154 to the rotor shaft RS side (right side in Fig. 2). The washer 153 is passed through the tip of the bolt 151 so as to contact with the pressing member 154, and the nut 152 is screwed on the tip of the bolt 151. The second and third transmitting members 12, 13 are tightened by an axial force of the bolt 151 via the pressing member 154 and the disc spring 155. Further, the third transmitting member 13 is urged by the disc spring 155.

Here, the limit torque Tlim of the torque limiter 10 is a torque transmitted between the rotor shaft RS and the input shaft IS, and is an upper limit of torque that does not cause the slip between the pair of first annular tapered surfaces 111a, 111b and the second and third annular tapered surfaces 122, 133. In the torque limiter 10, the limit torque Tlim is determined from a tightening torque of the bolt 151 and nut 152, stiffness of the disc spring 155, a contact area and a friction coefficient between the first annular tapered surface 111a and the second annular tapered surface 122, a contact area and a friction coefficient between the first annular tapered surface 111b and the third annular tapered surface 133, and the like.

As shown in Fig. 2, when the nut 152 is screwed onto the bolt 151, the recess 112a of the first transmitting member 11, the outer circumferential surface of the second transmitting member 12 and a part of the second annular tapered surface 122 define an annular space 17a that extends along an outer circumference of a contact portion between the first annular tapered surface 111a and the second annular tapered surface 122. Further, the seal member 16 disposed in the seal groove of the tubular portion 120 of the second transmitting member 12 seals a gap between the tubular portion 110 of the first transmitting member 11 and the tubular portion 120 of the second transmitting member 12 on the input shaft IS side (left side in Fig. 2) of the annular space 17a. The recess 112b of the first transmitting member 11, the outer circumferential surface of the third transmitting member 13 and a part of the third annular tapered surface 133 define an annular space 17b that extends along an outer circumference of a contact portion between the first annular tapered surface 111b and the third annular tapered surface 133. Further, the seal member 16 disposed in the seal groove of the tubular portion 130 of the third transmitting member 13 seals the gap between the tubular portion 110 of the first transmitting member 11 and the tubular portion 130 of the third transmitting member 13 on the rotor shaft RS side (right side in Fig. 2) of the annular space 17b.

In the torque limiter 10 configured as described above, the first transmitting member 11 rotates integrally with the rotor shaft RS on a drive side and includes the pair of first annular tapered surfaces 111a, 111b that are inclined in opposite directions to each other in the extending direction of the rotational axis. The second and third transmitting members 12, 13 rotate integrally with the input shaft IS on a driven side and also include second or third annular tapered surfaces 122, 133 capable of contacting with the first annular tapered surface 111a or 111b of the first transmitting member 11. Further, the second and third transmitting members 12, 13 are tightened by the tightening mechanism 15 such that the second and third annular tapered surfaces 122, 133 contacts with the first annular tapered surfaces 111a or 111b.

Thus, when the torque output from the motor generator MG to the rotor shaft RS or the torque transmitted from the drive wheels DW side to the input shaft IS is equal to or less than the above limit torque Tlim while the vehicle V is driven, the first annular tapered surface 111a and the second annular tapered surface 122 are frictionally engaged without slipping against each other, and the first annular tapered surface 111b and the third annular tapered surface 133 are also frictionally engaged without slipping against each other. As a result, the first, second and third transmitting members 11, 12, 13 rotate as one unit, and transmission of torque below the limit torque Tlim between the rotor shaft RS and the input shaft IS is allowed.

In the torque limiter 10, the contact areas of the pair of first annular tapered surfaces 111a, 111b and the second and third annular tapered surfaces 122, 133 are sufficiently secured while suppressing the increase in the outer diameters of the first, second and third transmitting members 11, 12, 13. Thus, by applying sufficient tightening force to the second and third transmitting members 12, 13 by means of the tightening mechanism 15, the limit torque Tlim, which is the upper limit of torque that does not cause the slip between the pair of first annular tapered surfaces 111a, 111b and the second and third annular tapered surfaces 122, 133, is sufficiently secured. As a result, the torque limiter 10 enables the limit torque Tlim to be sufficiently secured while reducing a size of the torque limiter 10 and thus the driving device 1 that includes the torque limiter 10.

When the torque output from the motor generator MG to the rotor shaft RS or the torque transmitted from the drive wheels DW side to the input shaft IS exceeds the above limit torque Tlim, the slip occurs between the first annular tapered surface 111a and the second annular tapered surface 122 and between the first annular tapered surface 111b and the third annular tapered surface 133. This prevents excessive torque from being transmitted from the motor generator MG to the input shaft IS side or from the drive wheels DW side to the motor generator MG side.

Further, in the torque limiter 10, the first and second transmitting members 11, 12 define the annular space 17a that extends along the outer circumference of the contact portion between the first annular tapered surface 111a and the second annular tapered surface 122. The first and third transmitting members 11, 13 define the annular space 17b that extends along the outer circumference of the contact portion between the first annular tapered surface 111b and the third annular tapered surface 133. This allows wear debris generated between the first annular tapered surface 111a and the second annular tapered surface 122 to be collected in the annular space 17a by centrifugal force and suppressed from being discharged to the outside, while wear debris generated between the first annular tapered surface 111b and the third annular tapered surface 133 is collected in the annular space 17b by centrifugal force and suppressed from being discharged to the outside. In the torque limiter 10, wear debris may be collected in a gap formed between the second transmitting member 12 (tubular portion 120) and the third transmitting member 13 (tubular portion 130) in the axial direction, thereby suppressing the discharge of the wear debris to the outside.

In addition, on the input shaft IS side (left side in Fig. 2) of the annular space 17a, the seal member 16 is disposed so as to seal the gap between the tubular portion 110 of the first transmitting member 11 and the tubular portion 120 of the second transmitting member 12. Further, on the rotor shaft RS side (right side in Fig. 2) of the annular space 17b, the seal member 16 is disposed so as to seal the gap between the tubular portion 110 of the first transmitting member 11 and the tubular portion 130 of the third transmitting member 13. This satisfactorily suppresses the discharge of wear dust from the annular space 17a, 17b to the outside. Thus, in the driving device 1 in which the torque limiter 10 is disposed in the same space as the motor generator MG, the gear train 2, and the like, that is, in the case 3, the wear debris is prevented from mixing around the motor generator MG and in engagement portions between the gears. One or both of the two sealing members 16 may be omitted from the torque limiter 10.

In the torque limiter 10, the hardness of the pair of first annular tapered surfaces 111a, 111b is determined to be lower than that of the second and third annular tapered surfaces 122, 133. Further, the area of the first annular tapered surface 111a is determined to be smaller than the area of the second annular tapered surface 122, and the area of the first annular tapered surface 111b is determined to be smaller than the area of the third annular tapered surface 133. Thus, the first annular tapered surfaces 111a, 111b, which have a smaller area, wear due to contact with the second or third annular tapered surfaces 122, 133. This satisfactorily suppresses formation of depressions in the contact portion of the second annular tapered surface 122, which has a larger area, with the first annular tapered surface 111a and the contact portion of the third annular tapered surface 133, which has a larger area, with the first annular tapered surface 111b, and accumulation of wear debris in the depression.

As a result, the wear debris is satisfactorily discharged from the contact portions between the pair of first annular tapered surfaces 111a, 111b and the second or third annular tapered surfaces 122, 133. In the torque limiter 10, the hardness of the second and third annular tapered surfaces 122, 133 may be determined to be lower than that of the pair of first annular tapered surfaces 111a, 111b. In this case, the area of the second annular tapered surface 122 may be determined to be smaller than that of the first annular tapered surface 111a, and the area of the third annular tapered surface 133 may be determined to be smaller than that of the first annular tapered surface 111b.

Further, in the torque limiter 10, the tightening mechanism 15 includes the pressing member 154, the bolt 151 and the nut 152 that tighten the second and third transmitting members 12, 13 via the pressing member 154, and the disc spring 155 as the elastic member disposed between the third transmitting member 13 and the pressing member 154. This ensures sufficient limit torque Tlim since the axial force of the bolt 151 tightens the second and third transmitting members 12, 13. The pressing member 154 may be disposed on the second transmitting member 12 side, and the disc spring 155 may be disposed between the second transmitting member 12 (for example, the reduced diameter portion 121) and the pressing member 154.

In the torque limiter 10, the disc spring 155 is disposed between the third transmitting member 13 and the pressing member 154, and the pressing member 154 is butted against the second transmitting member 12. This reduces variations in biasing force applied from the disc spring 155 to the second and third transmitting members 12, 13, that is, the limit torque Tlim, among multiple torque limiters 10 having the same structure. Further, the second transmitting member 12 may not be butted against the pressing member 154, but may be opposed to the pressing member 154 via a gap. The disc spring 155 may be omitted from the tightening mechanism 15. In this case, the pressing member 154 may contact with only the third transmitting member 13 and may also be opposed to the second transmitting member 12 via a gap.

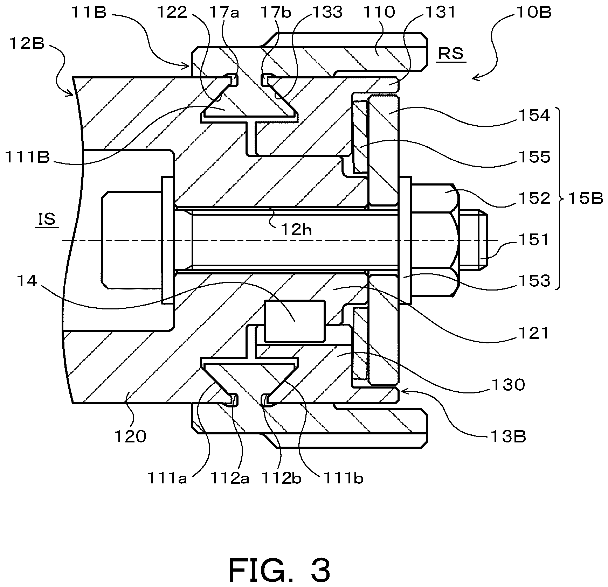

Fig. 3 is a cross sectional view of another torque limiter 10B of the present disclosure. Among the components of the torque limiter 10B, the same elements as those of the above torque limiter 10 are denoted with the same reference numerals, and redundant explanations are omitted.

The torque limiter 10B shown in Fig. 3 includes first, second, and third transmitting members 11B, 12B, 13B made of a metal and a tightening mechanism 15B. In the torque limiter 10B, a pair of first annular tapered surfaces 111A, 111B formed on a projection 111B of the first transmitting member 11B are conical surfaces inclined in opposite directions to each other in the extending direction of the rotation axis. In the torque limiter 10B, the second annular tapered surface 122 of the second transmitting member 12B and the third annular tapered surface 133 of the third transmitting member 13B are inverse conical surfaces capable of contacting with the first annular tapered surface 111a or 111b. Further, the recess 112a of the first transmitting member 11B and the outer circumferential surface of the second transmitting member 12B and a part of the second annular tapered surface 122 define the annular space 17a that extends along the outer circumference of the contact portion between the first annular tapered surface 111a and the second annular tapered surface 122. The recess 112b of the first transmitting member 11B, the outer circumferential surface of the third transmitting member 13B and a part of the third annular tapered surface 133 define the annular space 17b that extends along the outer circumference of the contact portion between the first annular tapered surface 111b and the third annular tapered surface 133. In addition, in the torque limiter 10B, the gap is formed between the second transmitting member 12B (tubular portion 120) and the third transmitting member 13 (tubular portion 130) in the axial direction to allow the collection of wear debris. In the torque limiter 10B, the same effect as in the above torque limiter 10 is obtained.

In the torque limiter 10B, the area of the first annular tapered surface 111a is determined to be smaller than the area of the second annular tapered surface 122, and the area of the first annular tapered surface 111b is determined to be smaller than the area of the third annular tapered surface 133. Thus, the hardness of the pair of first annular tapered surfaces 111a, 111b is determined to be lower than that of the second and third annular tapered surfaces 122, 133. In the torque limiter 10B, the area of the second annular tapered surface 122 may be determined to be smaller than the area of the first annular tapered surface 111a, and the area of the third annular tapered surface 133 may be determined to be smaller than the area of the first annular tapered surface 111b. In this case, the hardness of the second and third annular tapered surfaces 122, 133 may be determined to be lower than that of the pair of first annular tapered surfaces 111a, 111b.

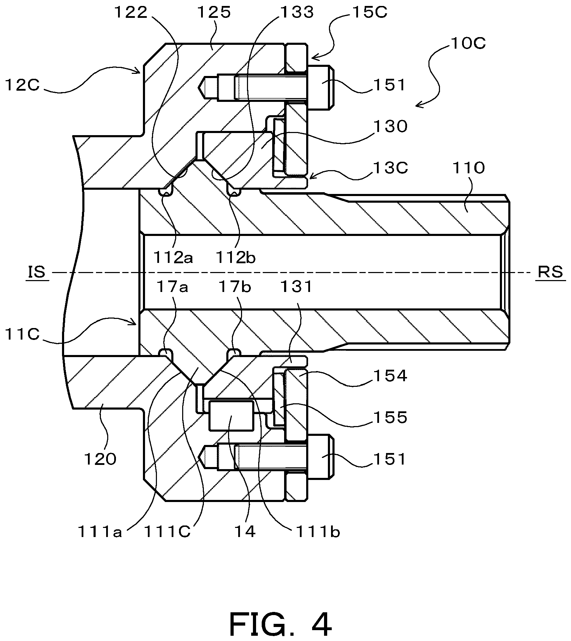

Fig. 4 is a cross sectional view of yet another torque limiter 10C of the present disclosure. Among the components of the torque limiter 10C, the same elements as those of the above torque limiter 10 and the like are denoted with the same reference numerals, and redundant explanations are omitted.

The torque limiter 10C shown in Fig. 4 is also disposed between the rotor shaft RS (first rotating member) of the driving device 1 to which power is transmitted from the motor generator MG and the input shaft IS (second rotating member) to which power is transmitted from the rotor shaft RS. As shown in Fig. 4, the torque limiter 10C includes a first transmitting member 11C, a second transmitting member 12C, a third transmitting member 13C, and a tightening mechanism 15C. The first transmitting member 11C is a tubular body formed of a metal such as steel, and is connected to the rotor shaft RS via a spline so as to rotate integrally with the rotor shaft RS. As shown in Fig. 4, the first transmitting member 11C includes the substantially cylindrical tubular portion 110 and an annular projection 111C protruding radially outward from the outer circumferential surface of the tubular portion 110.

A pair of first annular tapered surfaces 111a, 111b are formed on the projection 111C so as to be inclined in opposite directions to each other in the extending direction of the rotational axis of the first transmitting member 11C (see one dot chain line in Fig. 4). The first annular tapered surface 111a of the first transmitting member 11C is a conical surface with the rotation axis as its central axis, whose diameter increases from the end on the input shaft IS side (left end in Fig. 4) to the end on the rotor shaft RS side (right end in Fig. 4). The first annular tapered surface 111b of the first transmitting member 11C is a conical surface with the above rotational axis as its central axis, whose diameter increases from the end on the rotor shaft RS side (right end in Fig. 4) toward the end on the input shaft IS side (left end in Fig. 4). The first annular tapered surfaces 111a, 111b of the first transmitting member 11C are also symmetrically formed with respect to a plane passing through a center of the projection 111C in the axial direction and orthogonal to the above rotational axis. Further, the first transmitting member 11C includes the annular recess 112a that extends along the inner circumferential edge of the first annular tapered surface 111a and the annular recess 112b that extends along the inner circumferential edge of the first annular tapered surface 111b.

The second transmitting member 12C is a tubular body formed of a metal such as steel, and is connected to the input shaft IS so as to rotate integrally with the input shaft IS. As shown in Fig. 4, the second transmitting member 12C includes the substantially cylindrical tubular portion 120 and an enlarged diameter portion 125 with outer and inner diameters larger than those of the tubular portion 120, which is formed at an end of the tubular portion 120. The second annular tapered surface 122 is formed on the outer circumferential surface of the end (right end in Fig. 4) of the tubular portion 120 on the rotor shaft RS side so as to be located on the input shaft IS side rather than an end face of the enlarged diameter portion 125. The second annular tapered surface 122 of the second transmitting member 12C is an inverse conical surface with the rotational axis of the second transmitting member 12C (see on dot chain line in Fig. 4) as its central axis, whose diameter increases from the end on the input shaft IS side (left end in Fig. 4) to the end on the rotor shaft RS side (right end in Fig. 4). The apex angle of the cone defining the second annular tapered surface 122 of the second transmitting member 12C is the same as the apex angle of the cone defining the first annular tapered surface 111a of the first transmitting member 11C.

The third transmitting member 13C is a tubular body formed of steel or other metal. As shown in Fig. 4, the third transmitting member 13C includes the substantially cylindrical tubular portion 130 and the extended tubular portion 131 that extends axially from an inner circumference portion of the end face of the tubular portion 130 on the rotor shaft RS side (the right end in Fig. 4). The tubular portion 130 and the extended tubular portion 131 of the third transmitting member 13C have an inner diameter that is slightly larger than the outer diameter of the tubular portion 110 of the first transmitting member 11C. Further, the third annular tapered surface 133 is formed on the outer circumferential surface of the end of the tubular portion 130 on the input shaft IS side (left end in Fig. 4). The third annular tapered surface 133 is an inverse conical surface with the rotational axis of the third transmitting member 13 (see one dot chain line in Fig. 4) as its central axis, whose diameter increases from the end on the rotor shaft RS side (right end in Fig. 4) to the end on the input shaft IS side (left end in Fig. 4). The apex angle of the cone defining the third annular tapered surface 133 is the same as the apex angle of the cone defining the first annular tapered surface 111b of the first transmitting member 11.

In the torque limiter 10C, the area of the second annular tapered surface 122 of the second transmitting member 12C is larger than the area of the first annular tapered surface 111a of the first transmitting member 11C. The hardness of the second annular tapered surface 122 of the second transmitting member 12C is higher than the hardness of the first annular tapered surface 111a of the first transmitting member 11C. Further, the area of the third annular tapered surface 133 of the third transmitting member 13C is larger than the area of the first annular tapered surface 111b of the first transmitting member 11C. The hardness of the third annular tapered surface 133 of the third transmitting member 13C is higher than the hardness of the first annular tapered surface 111b of the first transmitting member 11C.

The end of the first transmitting member 11C on the input shaft IS side (left end in Fig. 4) is inserted into the second transmitting member 12C such that the first annular tapered surface 111a of the projection 111C contacts with the second annular tapered surface 122 and the first annular tapered surface 111b of the projection 111C is surrounded by the enlarged diameter portion 125. The end portion of the third transmitting member 13C on the third annular tapered surface 133 side is inserted into the second transmitting member 12C such that the third annular tapered surface 133 contacts with the first annular tapered surface 111b of the projection 111C. Thus, the second and third transmitting members 12C, 13C partially surround the first transmitting member 11C.

Further, the tubular portion 130 of the third transmitting member 13C is fitted into the enlarged diameter portion 125 of the second transmitting member 12C, and the tubular portion 130 engages with the key 14 as a detent held by the enlarged diameter portion 125. As a result, a rotation of the third transmitting member 13C with respect to the second transmitting member 12C is restricted, and the third transmitting member 13C is supported so as to rotate integrally by the second transmitting member 12C and is connected to the input shaft IS so as to rotate integrally. The second transmitting member 12C and the third transmitting member 13C may be connected to each other via a spline so as rotate integrally. The second and third transmitting members 12C, 13C are tightened by the tightening mechanism 15C such that the second annular tapered surface 122 closely contacts with the first annular tapered surface 111a of the first transmitting member 11C, and the third annular tapered surface 133 closely contacts with the first annular tapered surface 111b of the first transmitting member 11C.

The tightening mechanism 15C includes a plurality of bolts 151, the annular pressing member 154, and the annular disc spring 155 as the elastic member, as shown in Fig. 4. The disc spring 155 is disposed around the extended tubular portion 131 of the third transmitting member 13C so as to contact with the end face of the tubular portion 130 of the third transmitting member 13C, and is disposed radially inward of a tip of the enlarged diameter portion 125 of the second transmitting member 12C. The pressing member 154 is disposed around the extended tubular portion 131 of the third transmitting member 13C so as to contact with both the end face of the enlarged diameter portion 125 of the second transmitting member 12C and the disc spring 155. That is, the disc spring 155 is disposed between the third transmitting member 13C and the pressing member 154 so as to be located radially inwardly of a butt portion between the pressing member 154 and the enlarged diameter portion 125 of the second transmitting member 12C. Further, the plurality of bolts 151 are respectively inserted into a corresponding one of through holes formed in the pressing member 154 such that a head thereof contacts with the pressing member 154 and respectively screwed into corresponding one of threaded holes formed in the enlarged diameter portion 125 of the second transmitting member 12C. As a result, the second and third transmitting members 12C, 13C are tightened by the axial force of the plurality of bolts 151 via the pressing member 154 and the disc spring 155. Further, the third transmitting member 13C is urged by the disc spring 155.

As shown in Fig. 4, when the plurality of bolts 151 are screwed into the enlarged diameter portion 125 of the second transmitting member 12C, the recess 112a of the first transmitting member 11C, the outer circumferential surface of the second transmitting member 12C and a part of the second annular tapered surface 122 define the annular space 17a that extends along the inner circumference of the contact portion between the first annular tapered surface 111a and the second annular tapered surface 122. Further, the recess 112b of the first transmitting member 11C and the outer circumferential surface of the third transmitting member 13C and a part of the third annular tapered surface 133 define the annular space 17b that extends along the inner circumference of the contact portion of the first annular tapered surface 111b and the third annular tapered surface 133.

As described above, in the torque limiter 10C, the pair of first annular tapered surfaces 111a and 111b of the first transmitting member 11C are held by the second and third annular tapered surfaces 122, 133 outside in the radial direction. In the torque limiter 10C, the same effect is obtained as in the above torque limiter 10 where the pair of first annular tapered surfaces 111a, 111b are held by the second and third annular tapered surfaces 122, 133 inside in the radial direction. In the torque limiter 10C, wear debris generated between the first annular tapered surface 111a and the second annular tapered surface 122 is collected in the annular space 17a inside in the radial direction and suppressed from being discharged to the outside, and wear debris generated between the first annular tapered surface 111b and the third annular tapered surface 133 is collected in the annular space 17b inside in the radial direction and suppressed from being discharged to the outside. Further, in the torque limiter 10C, wear debris may be collected in the gap formed between the second transmitting member 12C (tubular portion 120) and the third transmitting member 13C (tubular portion 130) in the axial direction, thereby suppressing the discharge of the wear debris to the outside.

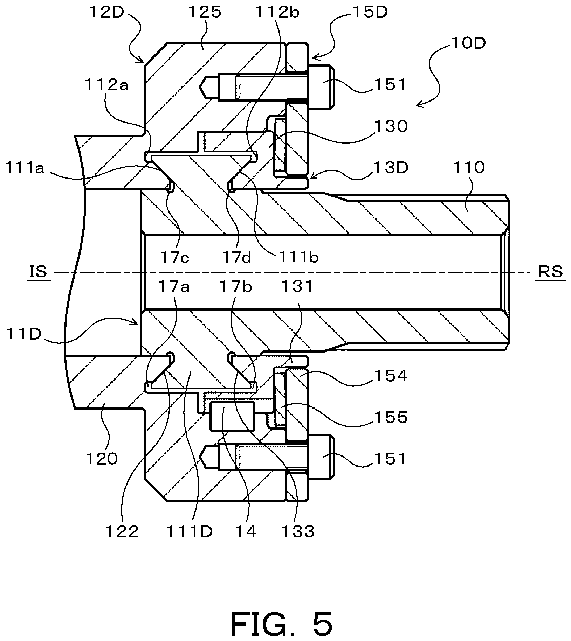

Fig. 5 is a cross sectional view of another torque limiter 10D of the present disclosure. Among the components of the torque limiter 10D, the same elements as those of the above torque limiter 10C and the like are denoted with the same reference numerals, and redundant explanations are omitted.

The torque limiter 10D shown in Fig. 5 includes first, second, and third transmitting members 11D, 12D, 13D made of a metal and a tightening mechanism 15D. In the torque limiter 10D, the pair of first annular tapered surfaces 111a, 111b formed on a projection 111D of the first transmitting member 11D are inverse conical surfaces inclined in opposite directions to each other in the extending direction of the rotational axis. The second annular tapered surface 122 of the second transmitting member 12D and the third annular tapered surface 133 of the third transmitting member 13D of the torque limiter 10D are conical surfaces capable of contacting with the first annular tapered surface 111a or 111b. Further, the torque limiter 10D includes the annular space 17a that extends along the outer circumference of the contact portion between the first annular tapered surface 111a and the second annular tapered surface 122, the annular space 17b that extends along the outer circumference of the contact portion between the first annular tapered surface 111b and the third annular tapered surface 133, an annular space 17c that extends along the inner circumference of the contact portion between the first annular tapered surface 111a and the second annular tapered surface 122, and an annular space 17d that extends along the inner circumference of the contact portion between the first annular tapered surface 111b and the third annular tapered surface 133. In addition, in the torque limiter 10D, a gap is formed between the second transmitting member 12D (tubular portion 120) and the third transmitting member 13D (tubular portion 130) in the axial direction to allow the collection of wear debris. In the torque limiter 10D, the same effect as in the above torque limiter 10C is obtained.

As shown in Fig. 5, in the torque limiter 10D, the area of the second annular tapered surface 122 is determined to be smaller than the area of the first annular tapered surface 111a, and the area of the third annular tapered surface 133 is determined to be smaller than the area of the first annular tapered surface 111b. Thus, the hardness of the second and third annular tapered surfaces 122, 133 is determined to be lower than that of the pair of first annular tapered surfaces 111a, 111b. In the torque limiter 10D, the area of the first annular tapered surface 111a may be determined to be smaller than the area of the second annular tapered surface 122, and the area of the first annular tapered surface 111b may be determined to be smaller than the area of the third annular tapered surface 133. In this case, the hardness of the pair of first annular tapered surfaces 111a, 111b may be determined to be lower than the hardness of the second and third annular tapered surfaces 122, 133.

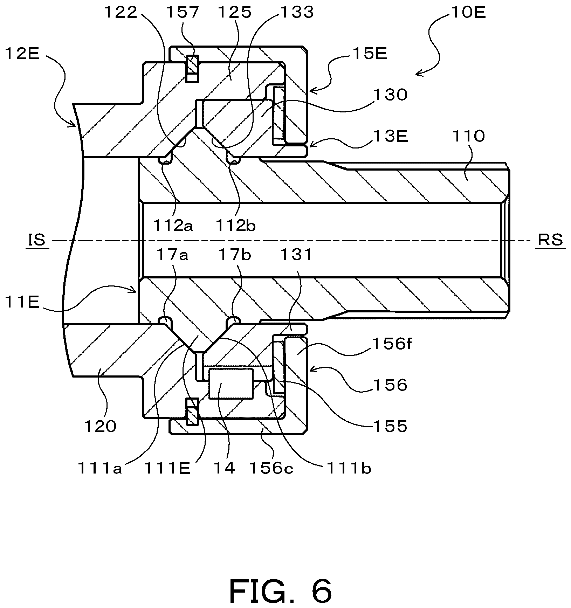

Fig. 6 is a cross sectional view of yet another torque limiter 10E of the present disclosure. Among the components of the torque limiter 10E, the same elements as those of the above torque limiter 10C and the like are denoted with the same reference numerals, and redundant explanations are omitted.

The torque limiter 10E shown in Fig. 6 includes first, second and third transmitting members 11E, 12E, 13E made of a metal and a tightening mechanism 15E. The pair of first annular tapered surfaces 111a, 111b of the first transmitting member 11E (projection 111E) are held by the second and third annular tapered surfaces 122, 133 outside in the radial direction. The tightening mechanism 15E of the torque limiter 10E includes the disc spring 155, a pressing member 156, and a snap ring 157. The pressing member 156 includes a tubular portion 156c that surrounds the enlarged diameter portion 125 of the second transmitting member 12E and an annular flange portion 156f that extends radially inward from an end (right end in Fig. 6) of the tubular portion 156c on the rotor shaft RS side. The enlarged diameter portion 125 of the second transmitting member 12E is fitted within the tubular portion 156c of the pressing member 156. An inner surface of the flange portion 156f contacts with the disc spring 155, and the extended tubular portion 131 of the third transmitting member 13E is fitted into a hole of the flange portion 156f. The pressing member 156 is secured to the enlarged diameter portion 125 of the second transmitting member 12E via the snap ring 157 so as to compress the disc spring 155 together with the third transmitting member 13E. The tightening mechanism 15E also enables the second and third transmitting members 12E, 13E to be tightened so as to ensure the sufficient limit torque Tlim. In the torque limiter 10E, wear debris may be collected in the gap formed between the second transmitting member 12E (tubular portion 120) and the third transmitting member 13E (tubular portion 130) in the axial direction, and the annular spaces 17a, 17b, thereby suppressing the discharge of the wear debris to the outside.

In the above torque limiters 10B, 10C, 10D, 10E, the disc spring 155 may also be disposed between the second transmitting member 12B-12E and the pressing member 154, and the pressing member 154 may butt against the third transmitting member 13B-13E. The disc spring 155 may be omitted from the tightening mechanisms 15B, 15C, 15D, 15E, and the pressing member 154 may be in contact with both the second and third transmitting members 12B-12E, 13B-13E. Further, the torque limiters 10B, 10C, 10D, 10E may include a sealing member that seals the gap between the tubular portion 110 of the first transmitting member 11B-11E and the tubular portion 120 of the second transmitting member 12B-12E on the input shaft IS side of the annular space 17a (left side in Fig. 3-Fig. 6), and a seal member that seals the gap between the tubular portion 110 of the first transmitting member 11B-11E and the tubular portion 130 of the third transmitting member 13B-13E on the rotor shaft RS side of the annular space 17b (right side in Fig. 3 - Fig.6) .

In torque limiters 10, 10B, 10C, 10D, 10E, the first transmitting member 11-11E, the second transmitting member 12-12E, and the third transmitting member 13-13E are formed of a metal, but are not limited to this. That is, the first, second, and third transmitting members 11-11E, 12-12E, and 13-13E may be formed of a material other than the metal that allows frictional engagement between the two members, such as a resin.

The first transmitting member 11-11E may be connected to the input shaft IS to rotate integrally, and the second transmitting member 12-12E may be connected to the rotor shaft RS to rotate integrally. In the driving device 1, the counter shaft CS may be split in two, and the torque limiter 10-10E may be disposed between the counter driven gear 22 and the drive pinion gear 23. Further, the torque limiter 10-10E may be applied to a driving device that includes first and second electric motors and a planetary gear, as described in the Patent Literatures 1 and 2. In this case, the torque limiter 10-10E may be disposed at least one of the following locations: between the engine (internal combustion engine) and the damper mechanism, between the damper mechanism (engine) and the planetary gear (carrier), between the first electric motor and the planetary gear (sun gear), between the counter drive gear and the counter driven gear, and between the second electric motor and the drive gear (counter driven gear).

Torque limiters 10-10E may be disposed between the engine (internal combustion engine), which generates power by the explosive combustion of a mixture of hydrocarbon-based fuel such as gasoline, diesel oil, or LPG and air, and a transmission, which transmits the power (torque) from the engine to the wheels (drive wheels). In this case, the transmission may include a fluid transmission (torque converter), a lock-up clutch and a stepped or non-stepped transmission mechanism. The transmission may include a starting clutch and a stepped or non-stepped transmission mechanism. The transmission may include one motor generator, at least one clutch and a transmission mechanism.

Furthermore, the torque limiter 10-10E is described as being disposed in the case 3 of the driving device 1, which is the space in which oil for lubrication and cooling is supplied, but is not limited thereto. That is, the torque limiter 10-10E may be disposed outside the space where the oil for lubrication and cooling and operating oil for engaging the clutch and the like are supplied.

As has been described above, the torque limiter (10, 10B, 10C, 10D, 10E) of the present disclosure is disposed between the first rotating member (RS) to which power is transmitted from the drive source (MG) and the second rotating member (IS) to which power is transmitted from the first rotating member (RS). The torque limiter (10, 10B, 10C, 10D, 10E) includes the first transmitting member (11, 11B, 11C, 11D, 11E) configured to rotate integrally with one of the first and second rotating members (RS, IS) and to include the pair of first annular tapered surfaces (111A, 111B) inclined in opposite directions to each other in the extending direction of the rotational axis; the second transmitting member (12, 12B, 12C, 12D, 12E) configured to rotate integrally with the other of the first and second rotating members (RS,IS) and to include the second annular tapered surface (122) capable of contacting with one of the pair of first annular tapered surfaces (111a, 111b) of the first transmitting member (11, 11B, 11C, 11D, 11E); the third transmitting member (13, 13B, 13C, 13D, 13E) configured to rotate integrally with the other of the first and second rotating members (RS, IS) and to include the third annular tapered surface (133) capable of contacting with the other of the pair of first annular tapered surfaces (111a, 111b) of the first transmitting member (11, 11B, 11C, 11D, 11E) of the first transmitting member (11, 11B, 11C, 11D, 11E); and the tightening mechanism (15, 15B, 15C, 15D, 15E) configured to tighten the second and third transmitting members (12, 12B, 12C, 12D, 12E, 13, 13B, 13C, 13D, 13E) such that the second annular tapered surface (122) contacts with one of the pair of first annular tapered surfaces (111a, 111b) and the third annular tapered (133) surface contacts with the other of the pair of first annular tapered surfaces (111a, 111b) .

The torque limiter of the present disclosure is disposed between the first rotating member to which power is transmitted from the drive source and the second rotating member to which power is transmitted from the first rotating member. The torque limiter includes the first transmitting member, the second transmitting member, the third transmitting member, and the tightening mechanism. The first transmitting member is configured to rotate integrally with one of the first and second rotating members and to include the pair of first annular tapered surfaces inclined in opposite directions to each other in then extending direction of the rotational axis. The second transmitting member is configured to rotate integrally with the other of the first and second rotating members and to include the second annular tapered surface capable of contacting with one of the pair of first annular tapered surfaces of the first transmitting member. The third transmitting member is configured to rotate integrally with the other of the first and second rotating members and to include the third annular tapered surface capable of contacting with the other of the pair of first annular tapered surfaces of the first transmitting member. The tightening mechanism is configured to tighten the second and third transmitting members such that the second annular tapered surface contacts with one of the pair of first annular tapered surfaces and the third annular tapered surface contacts with the other of the pair of first annular tapered surfaces. The torque limiter of the present disclosure allows a sufficient contact area between the pair of first annular tapered surfaces and the second and third annular tapered surfaces while suppressing an increase in outer diameters of the first, second, and third transmitting members. Thus, by applying sufficient tightening force to the second and third transmitting members, a limit torque, which is an upper limit value of torque that does not cause a slip between the pair of first annular tapered surfaces and the second and third annular tapered surfaces, is sufficiently secured. As a result, the torque limiter of the present disclosure enables the limit torque to be sufficiently secured while reducing the size of the torque limiter and thus the device including the torque limiter. The torque limiter of the present disclosure may be disposed within a space in which oil is supplied, or outside of a space in which oil is supplied.

The first and second transmitting members (11, 11B, 11C, 11D, 11E, 12, 12B, 12C, 12D, 12E) may define an annular space (17a) that extends along an outer or inner circumference of a contact portion between the one of the pair of first annular tapered surfaces (111A, 111B) and the second annular tapered surface (122). The first and third transmitting members (11, 11B, 11C, 11D, 11E, 13, 13B, 13C, 13D, 13E) may define an annular space (17b) that extends along an outer or inner circumference of a contact portion between the other of the pair of first annular tapered surfaces (111A, 111B) and the third annular tapered surface (133). The torque limiter of this aspect collects the wear debris generated between one of the first annular tapered surfaces and the second annular tapered surface in the annular space defined by the first and second transmitting members and suppresses the wear debris from being discharged to the outside. Further, the torque limiter of this aspect collects the wear debris generated between the other of the first annular tapered surfaces and the third annular tapered surface in the annular space defined by the first and third transmitting members and suppresses the wear debris from being discharged to the outside. As a result, when the torque limiter is disposed in the same space as the electric motor, gears and the like, the wear debris is prevented from mixing into the electric motor and an engagement portion between gears.

The pair of first annular tapered surfaces (111a, 111b), the second and third annular tapered surfaces (122, 133) may have the different hardness from each other. The area of one of the pair of first annular tapered surfaces (111a, 111b), the second and third annular tapered surfaces (122, 133) with the lower hardness is smaller than the area of the other with the higher hardness. In the torque limiter of this aspect, one of the pair of first annular tapered surfaces and the second and third annular tapered surfaces with lower hardness wears out due to contact with the other. This satisfactorily suppresses formation of depressions in the contact portions between one of the first annular tapered surfaces and the second annular tapered surface and between the other of the first annular tapered surfaces and the third annular tapered surface, and accumulation of wear debris in the depressions. As a result, wear debris is satisfactorily discharged from the contact area between the pair of first annular tapered surfaces and the second or third annular tapered surfaces.

The tightening mechanism (15, 15B, 15C, 15D) may include the pressing member (154) and a bolt (151) that tightens the second and third transmitting members (12, 12B, 12C, 12D, 13, 13B, 13C, 13D) via the pressing member (154).

This ensures sufficient limit torque since the axial force of the bolt tightens the second and third transmitting members.

The tightening mechanism (15, 15B, 15C, 15D) includes the elastic member (155) disposed between one of the second and third transmitting members (12, 12B, 12C, 12D, 13, 13B, 13C, 13D) and the pressing member (154).

The pressing member (154) may be butted against the second transmitting member (12, 12B, 12C, 12D). The elastic member (155) may be disposed between the third transmitting member (13, 13B, 13C, 13D) and the pressing member (154) such that the elastic member (155) is disposed radially outside or radially inside of the butt portion between the pressing member (154) and the second transmitting member (12, 12B, 12C, 12D). This reduces variations in biasing force or the limit torque, applied from the elastic member to the second and third transmitting members among multiple torque limiters having the same structure.

The first transmitting member (11, 11B) may be the tubular body configured to at least partially surround the second and third transmitting members (12, 12B, 13, 13B). One of the second and third transmitting members (12, 12B, 13, 13B) may be supported by the other so as to rotate integrally.

The second and third transmitting members (12C, 12D, 12E, 13C, 13D, 13E) may be tubular bodies configured to at least partially surround the first transmitting member (11C, 11D, 11E) and to be respectively supported by the first transmitting member (11C, 11D, 11E) from inside in a radial direction.

The pair of first annular tapered surfaces (111a, 111b) may be inverse conical surfaces inclined in opposite directions to each other. The second and third annular tapered surfaces (122, 133) may be conical surfaces.

The pair of first annular tapered surfaces (111a, 111b) may be conical surfaces inclined in opposite directions to each other. The second and third annular tapered surfaces (122, 133) are inverse conical surfaces.

### Industrial Applicability

The technique of the present disclosure is applicable to, for example, the manufacturing industry of the torque limiter and the like.

## Claims

1. A torque limiter disposed between a first rotating member to which power is transmitted from a drive source and a second rotating member to which power is transmitted from the first rotating member, the torque limiter comprising:
a first transmitting member configured to rotate integrally with one of the first and second rotating members and to include a pair of first annular tapered surfaces inclined in opposite directions to each other in an extending direction of a rotational axis;
a second transmitting member configured to rotate integrally with the other of the first and second rotating members and to include a second annular tapered surface capable of contacting with one of the pair of first annular tapered surfaces of the first transmitting member;
a third transmitting member configured to rotate integrally with the other of the first and second rotating members and to include a third annular tapered surface capable of contacting with the other of the pair of first annular tapered surfaces of the first transmitting member; and
a tightening mechanism configured to tighten the second and third transmitting members such that the second annular tapered surface contacts with one of the pair of first annular tapered surfaces and the third annular tapered surface contacts with the other of the pair of first annular tapered surfaces.

2. The torque limiter according to claim 1,
wherein the first and second transmitting members define an annular space that extends along an outer or inner circumference of a contact portion between the one of the pair of first annular tapered surfaces and the second annular tapered surface, and
wherein the first and third transmitting members define an annular space that extends along an outer or inner circumference of a contact portion between the other of the pair of first annular tapered surfaces and the third annular tapered surface.

3. The torque limiter according to either claim 1 or 2,
wherein the pair of first annular tapered surfaces, the second and third annular tapered surfaces have a different hardness from each other, and
wherein an area of one of the pair of first annular tapered surfaces, the second and third annular tapered surfaces with a lower hardness is smaller than an area of the other with a higher hardness.

4. The torque limiter according to any one of claims 1 to 3,
wherein the tightening mechanism includes a pressing member and a bolt that tightens the second and third transmitting members via the pressing member.

5. The torque limiter according to claim 4,
wherein the tightening mechanism includes an elastic member disposed between one of the second and third transmitting members and the pressing member.

6. The torque limiter according to claim 5,
wherein the pressing member is butted against the second transmitting member, and
wherein the elastic member is disposed between the third transmitting member and the pressing member such that the elastic member is disposed radially outside or radially inside of a butt portion between the pressing member and the second transmitting member.

7. The torque limiter according to any one of claims 1 to 6,
wherein the first transmitting member is a tubular body configured to at least partially surround the second and third transmitting members, and
wherein one of the second and third transmitting members is supported by the other so as to rotate integrally.

8. The torque limiter according to any one of claims 1 to 6,
wherein the second and third transmitting members are tubular bodies configured to at least partially surround the first transmitting member and to be respectively supported by the first transmitting member from inside in a radial direction.

9. The torque limiter according to any one of claims 1 to 8,
wherein the pair of first annular tapered surfaces are inverse conical surfaces inclined in opposite directions to each other, and
wherein the second and third annular tapered surfaces are conical surfaces.

10. The torque limiter according to any one of claims 1 to 8,
wherein the pair of first annular tapered surfaces are conical surfaces inclined in opposite directions to each other, and
wherein the second and third annular tapered surfaces are inverse conical surfaces.
